# FASCICULE DE BREVET EUROPEEN

(11) **EP 1 767 492 B1**
(45) Date de publication et mention de la délivrance du brevet: **24.08.2011**
(21) Numéro de dépôt: 06291447.8
(22) Date de dépôt: 14.09.2006
(51) Int. Cl.: C01B 3/38, B01J 8/06

(54) **Procédé de production de gaz de synthèse par vaporéformage dans un réacteur - échangeur**
Verfahren zur Herstellung von Synthesegas in einem Wärmeaustauschreaktor
Process for the production of synthesis gas by steam reforming in an exchanger-reactor

(30) Priorité: 21.09.2005 FR 0509668
(43) Date de publication de la demande: 28.03.2007
(73) Titulaire: Institut Français du Pétrole, 92852 Rueil Malmaison Cedex (FR)
(72) Inventeur: Rojey, Alexandre, 92500 Rueil Malmaison (FR); Bertholin, Stéphane, 69100 Villeurbanne (FR); Giroudière, Fabrice, 69530 Orlienas (FR); Lenglet, Eric, 92500 Rueil Malmaison (FR)

(56) Documents cités:
- WO-A-02/02220
- US-A- 4 714 593
- US-A- 5 229 102
- US-A1- 2002 073 938

## Description

### Domaine de l'invention:

L'objet de l'invention concerne la production de gaz de synthèse à partir de gaz naturel ou d'hydrocarbures légers: méthane, éthane, propane, butane, voire des hydrocarbures ayant moins de 10 atomes de carbone, ainsi que leurs mélanges.
Le gaz de synthèse est un mélange composé principalement (après élimination de l'eau) d'hydrogène, de monoxyde de carbone et de dioxyde de carbone. Il contient souvent de petites quantités d'hydrocarbures résiduels, typiquement de méthane.
Le gaz de synthèse peut être utilisé pour produire de l'hydrogène. Il peut être également utilisé pour produire des composés liquides par conversion chimique, par exemple des composés oxygénés (méthanol, diméthyl-éther ...), ou des hydrocarbures, notamment oléfiniques ou paraffiniques.

### Art antérieur:

On connaît déja plusieurs procédés de production de gaz de synthèse, notamment le vaporéformage (procédé le plus utilisé), l'oxydation partielle et le procédé autotherme.
Le vaporéformage (connu sous le sigle SMR qui provient de l'anglais "steam methane reforming" qui signifie "réformage du méthane à la vapeur"), consiste à faire réagir la charge sur un catalyseur en présence de vapeur d'eau pour obtenir un gaz de synthèse qui contient principalement (hors vapeur d'eau) un mélange d'oxyde de carbone et d'hydrogène. Cette opération est endothermique. Elle est réalisée typiquement en faisant circuler la charge, en présence de vapeur d'eau dans des tubes remplis de catalyseur, (généralement un catalyseur au nickel, par exemple comprenant de 6 à 25% poids de nickel déposé sur un support comprenant principalement de l'alumine, ou un mélange d'alumine et d'un ou plusieurs autres composés réfractaires). Les tubes sont typiquement chauffés par radiation dans des fours tubulaires. Les points les plus chauds de la flamme doivent être maintenus suffisamment distants des tubes pour qu'il n'y ait pas de surchauffe excessive et de ce fait, les fours utilisés sont encombrants et coûteux.
Il a par ailleurs déja été proposé de réaliser un vaporéformage dans un réacteur-échangeur (ceci signifiant que la chaleur est transmise majoritairement par convection, et non majoritairement par radiation comme dans un four), le milieu réactionnel étant chauffé indirectement par des fumées à très haute température.

L'utilisation de fumées à très haute température dans un échangeur se révèle toutefois délicate.

L'oxydation partielle (connue sous le sigle POX qui provient de l'anglais "partial oxydation" qui signifie oxydation partielle), consiste à former par combustion en conditions sous-stoechiométriques un mélange à haute température - généralement entre 1000°C et 1600 °C - d'hydrocarbures et d'air ou d'oxygène, pour oxyder les hydrocarbures et obtenir un gaz de synthèse. Ce procédé utilise des quantités importantes d'oxygène, lorsqu'on ne peut utiliser de l'air (lorsqu'on recherche un gaz de synthèse sans azote).

Le procédé autotherme réalise une oxydation partielle immédiatement suivie par un vaporéformage catalytique en régime adiabatique à haute température, par exemple dans la plage de températures de sortie: 900°C -1000°C. Ce procédé réalise une combinaison en série des deux modes réactionnels précédents. Il consomme moins d'oxygène que le procédé POX, mais nécessite un lit catalytique.

Un but du procédé selon l'invention est de produire du gaz de synthèse à partir d'hydrocarbures légers dans une installation beaucoup plus compacte qu'une installation de vaporéformage conventionnelle (à four), nécessitant typiquement moins d'oxygène que les procédés POX et autotherme, voire pas d'oxygène du tout, et en limitant les moyens de combustion mis en oeuvre. Le procédé selon l'invention est donc très performant du point de vue énergétique et ceci avec un encombrement réduit et un coût d'investissement limité.
L'invention permet aussi de réduire les températures les plus élevées utilisées tout en maintenant l'efficacité énergétique à un niveau élevé. Ceci permet d'augmenter la fiabilité et la durée de vie de l'installation.

### Définition sommaire de l'invention:

Pour atteindre les buts précités, Le procédé selon l'invention utilise de façon particulière un fluide de chauffage HF pour la réalisation des transferts thermiques nécessaires aux réactions endothermiques de vaporéformage.

L'un des aspects les plus importants de ce procédé est l'utilisation, dans un réacteur-échangeur R réalisant un vaporéformage, d'un fluide de chauffage HF obtenu selon une combustion étagée, permettant de transférer plusieurs fois de la chaleur au milieu réactionnel de vaporéformage, avec une ou plusieurs combustion(s) intermédiaire(s) pour remonter le niveau de température de ce fluide de chauffage HF. On utilise ainsi, grâce aux réchauffages multiples, un volume de gaz plus faible pour transférer une quantité de chaleur donnée. Il en résulte un gain énergétique. De plus la compacité de l'installation est notablement plus grande que celle d'une installation classique de vaporéformage dans un four. Les réchauffages (combustions) multiples de HF permettent également de limiter les températures maximales utilisées, et donc d'augmenter la durée de vie de l'installation..

Il a également été découvert selon une variante caractéristique du procédé selon la présente invention, qu'il est possible de réaliser une combustion étagée dans une installation plus compacte et économique, en la réalisant dans un réacteur-échangeur compact, à condition d'éviter la présence d'une flamme au niveau des tubes de vaporéformage, dont les points chauds doivent être éliminés car ils peuvent conduire à la détérioration ou la destruction de ces tubes.
L'invention permet donc également de réaliser l'opération de vaporéformage dans un réacteur-échangeur R en développant au niveau du fluide de chauffage HF une réaction de combustion sans flamme à l'intérieur de la calandre du réacteur-échangeur R, tout du moins au niveau des tubes de vaporéformage.

### Description détaillée de l'invention:

Les références indiquées ci-après correspondent à celles utilisées plus loin pour la description des figures annexées. Dans ce qui suit, on utilisera indifféremment les expressions "combustion partielle" et "oxydation partielle" ou "POX". Une combustion pourra désigner une combustion partielle ou totale.
L'invention propose un procédé de production d'un gaz de synthèse SG à partir d'une charge globale F constituée d'hydrocarbures et optionnellement de composés recyclés, F comprenant une première charge F1, une seconde charge F2 et une troisième charge F3, dans lequel:
- on soumet un courant comprenant la première charge F1 additionnée de vapeur d'eau à un vaporéformage pour la production d'une fraction au moins du gaz de synthèse SG dans au moins un réacteur-échangeur multitubulaire R comprenant une pluralité de tubes réactionnels (38) contenant un catalyseur de vaporéformage et une calandre contenant ces tubes;
- on chauffe principalement par convection lesdits tubes réactionnels (38) par circulation dans ladite calandre d'un fluide HF de chauffage externe de ces tubes, dans lequel HF comprend au moins un premier courant de gaz de combustion partielle ou totale de la deuxième charge F2, que l'on fait circuler dans le réacteur-échangeur R pour le chauffage des tubes réactionnels, puis que l'on mélange dans au moins une zone de combustion complémentaire (32, 34, 42, 44) avec au moins une partie de la troisième charge F3 et un gaz comprenant de l'oxygène, afin d'augmenter la température dudit premier courant, puis le courant du mélange ainsi obtenu circule dans le réacteur-échangeur R pour un chauffage complémentaire des tubes réactionnels (38) avant de sortir de ce réacteur-échangeur.
- on produit le gaz de synthèse SG à partir de l'effluent de vaporéformage de F1, et optionnellement d'une partie ou de la totalité de HF.

Les charges F1, F2, et F3 peuvent être diverses, gazeuses et/ou liquides. Elles peuvent être de même composition ou de compositions différentes. Le plus souvent toutefois, les charges F1, F2, et F3 sont des hydrocarbures essentiellement gazeux sous une pression de 2MPa et à la température de 20°C. Typiquement, F1, F2, et F3 sont de composition identique et proviennent d'un gaz naturel, ou purifié, ou d'un mélange gazeux composé principalement, en % molaire, d'hydrocarbures ayant moins de 5 atomes de carbone.

Selon l'invention, le terme charge désigne aussi bien une charge d'hydrocarbures, qu'un courant de recyclage issu de la charge d'hydrocarbures. Ainsi, F2 et/ou F3 peuvent également comprendre ou être constituées par un courant de recyclage, notamment un courant comprenant une fraction séparée en aval telle qu'une fraction de SG séparée par adsorption et désorption à balancement de pression pour la production d'hydrogène (typiquement un gaz de purge d'adsorption dite PSA). On peut donc notamment utiliser pour F2 et/ou F3 un gaz de purge contenant du CO et du méthane résiduel, et souvent du CO2. Alternativement, on peut utiliser pour F2 et/ou F3 de l'hydrogène sensiblement pur, notamment une fraction de l'hydrogène produit, lorsque SG est utilisé pour la production d'hydrogène.

On peut généralement utiliser une, ou deux, ou trois, voire entre 4 et 8 zones complémentaires de combustion. De façon préférée on utilise entre 1 et 4 zones complémentaires de combustion, et de façon très préférée 2 ou 3 zones complémentaires de combustion. Cette combustion étagée permet de transférer une quantité importante de chaleur, apportée par incréments de température, avec des refroidissements intermédiaires (transferts de chaleur pour le vaporéformage), sans atteindre les températures particulièrement élevées qui seraient obtenues en réalisant toute la combustion en une étape. Inversement, si on limite la température maximale des gaz de combustion, une combustion étagée, avec transfert(s) de chaleur intermédiaire(s) permet de transférer une quantité de chaleur notablement supérieure pour un volume de gaz de combustion donné, ou une quantité de chaleur identique pour un volume de gaz de combustion plus faible.

La zone de combustion initiale peut être interne ou externe à la calandre du réacteur-échangeur R. La combustion peut être partielle ou totale, et utiliser de l'oxygène ou de l'air, ou de l'air enrichi en oxygène comme comburant.
On peut utiliser notamment comme fluide de chauffage HF un courant d'oxydation partielle d'hydrocarbures à l'oxygène, typiquement sous une pression comprise entre 0,5 et 12 MPa, sensiblement exempt d'azote et comprenant de préférence de la vapeur d'eau. Un tel fluide HF à pression élevée et comprenant de l'hydrogène a de très bonnes propriétés de fluide thermique (coefficient d'échange thermique élevé).

On utilise aussi souvent comme fluide de chauffage HF un gaz de combustion totale d'hydrocarbures à l'air, typiquement sous une pression comprise entre 0,4 et 4 MPa.

Selon une première variante caractéristique, la ou les zone(s) complémentaire(s) de combustion est (sont) disposée(s) à l'intérieur de la calandre du réacteur-échangeur R. La zone de combustion initiale peut également être une zone interne au réacteur-échangeur.
Typiquement, la zone complémentaire de combustion est une zone exempte de tubes réactionnels et sensiblement contigue à la paroi interne de la calandre du réacteur-échangeur R.

De façon très préférée selon cette première variante caractéristique de l'invention, on évite la formation de flammes au contact des tubes réactionnels.
Ceci peut être fait, selon une première variante de réalisation de la combustion, en limitant la présence de flammes à une ou plusieurs zone(s) de combustion exempte(s) de tubes réactionnels, notamment contigue(s) à la paroi interne de la calandre du réacteur-échangeur R. On peut notamment utiliser un ou des brûleur(s) à flamme plate, ou courte de type connu, et/ou de multiples brûleurs de petites dimensions donnant par conséquent des flammes plus petites.
Selon un autre mode de réalisation de la combustion, on injecte en un point à l'intérieur de la calandre du réacteur-échangeur une partie au moins de F3 et un gaz contenant de l'oxygène (par exemple de l'air ou O2), dans des conditions de turbulence et/ou de recirculation suffisantes pour obtenir une zone de combustion en régime homogène dans le réacteur-échangeur R.
Pour réaliser des conditions de combustion aussi homogènes que possible, on peut opérer à des températures relativement modérées (par exemple avec une température finale de moins de 1200°C, voire de 1150°C, par exemple comprise entre 1000°C et 1180°C) permettant de réaliser plus facilement une combustion homogène (sans flamme). La plage de conditions adéquates (concentrations et températures) pour un tel régime de combustion homogène peut être déterminée précisément par une modélisation de la combustion et/ou par des essais en faisant varier la recirculation des gaz et la turbulence). La combustion homogène est en effet favorisée par un mélange très turbulent des réactifs et par leur recirculation. De préférence, on met en oeuvre la combustion en régime homogène à proximité immédiate des tubes de vaporéformage et on réalise un transfert thermique immédiat de la chaleur de combustion vers les tubes. La combustion en régime homogène peut alors se poursuivre au niveau des tubes de vaporéformage car elle ne génère pas de points chauds susceptibles de les détériorer. Il devient alors possible de rendre plus homogènes les températures dans le réacteur-échangeur, ce qui permet d'optimiser les transferts thermiques, de réduire le nombre de zones complémentaires de combustion et/ou de limiter la température locale maximale effective du fluide HF, ce qui est favorable du point de vue de la durée de vie des équipements.

Selon un troisième mode de réalisation de la combustion, on injecte en un point à l'intérieur de la calandre du réacteur-échangeur une partie au moins de F3 et un gaz contenant de l'oxygène en amont d'une zone de combustion catalytique, dans des conditions ou la température du mélange obtenu est inférieure à la température ou la combustion se produit avec une flamme.
La combustion catalytique est une technique bien connue dans le domaine de la combustion, et peut utiliser divers catalyseurs. On peut par exemple se référer aux brevets ou demandes de brevet US20050081443; US 5,980,843 ; US 5,405,260 ; EP 0 689 870 B1 ; EP 0 712 661 B1.
Les zones de températures initiales et finales permettant de réaliser dans les meilleures conditions une combustion catalytique peuvent être déterminées par des essais, pour un catalyseur donné. Les températures initiales de mélange (avant combustion) préférées sont inférieures à 900°C, et souvent comprises entre 800°C et 880°C. Les températures finales (après combustion) préférées sont inférieures à 1000°C, et souvent comprises entre 800°C et 980°C. Aussi, on peut avantageusement limiter la combustion catalytique à la partie la moins chaude du réacteur-échangeur R. Ainsi, si le courant comprenant la première charge F1 additionnée de vapeur d'eau rentre à une extrémité du réacteur-échangeur, la zone de combustion catalytique est située typiquement dans la première moitié du réacteur-échangeur relativement à cette extrémité.

Selon une seconde variante caractéristique du procédé selon l'invention, la zone de combustion initiale peut être disposée à l'extérieur de la calandre (37) du réacteur-échangeur R. Cette option conduit à une réalisation moins compacte, mais autorise des dimensionnements standards pour les brûleurs et la zone de combustion.

La circulation du fluide de chauffage HF peut être réalisée de différentes façons.

Le plus souvent, le courant comprenant la première charge F1 additionnée de vapeur d'eau circule dans le réacteur-échangeur essentiellement selon une direction, et le fluide de chauffage HF circule au moins globalement à contre-courant par rapport à F1 (c'est-à-dire soit à contre-courant pur, HF circulant parallèlement aux tubes, soit localement en courant croisé, mais globalement à contre-courant d'ensemble).
Une circulation à co-courant est toutefois possible. Dans ce cas, si le courant comprenant la première charge F1 additionnée de vapeur d'eau circule dans le réacteur-échangeur essentiellement selon une direction, le fluide de chauffage HF circule au moins globalement à co-courant par rapport à F1 (co-courant pur ou d'ensemble).

Les pressions respectives P1 et P2 de l'effluent de vaporéformage, noté SG1, et de HF en sortie du réacteur-échangeur vérifient typiquement les conditions suivantes:
0,8 MPa < P1< 12 MPa ; de préférence 1,5 MPa < P1< 5 MPa ; et de façon très préférée, 1,8 MPa < P1< 4,5 MPa ;
0,4 MPa < P2< 12 MPa ; de préférence 0,4 MPa < P2< 5 MPa; et de façon très préférée, 0,8 MPa < P1 < 4,5 MPa ;
La pression relativement haute de HF permet d'obtenir des propriétés de transfert thermique élevé.
En général, en sortie du réacteur-échangeur R, le fluide de chauffage HF, typiquement à température relativement élevée, par exemple de l'ordre de 1000°C, échange de la chaleur avec le courant comprenant la première charge F1 additionnée de vapeur d'eau , pour le vaporéformage partiel préliminaire de F1 dans un autre réacteur-échangeur de chaleur référencé ci-après (2b), juste avant l'entrée de F1 dans le réacteur-échangeur principal R. Ce pré-vaporéformage, est typiquement mis en oeuvre de façon similaire à celle du vaporéformage principal, dans un réacteur-échangeur (2b) à tubes réactionnels contenant un catalyseur de vaporéformage, et est typiquement réalisé à des températures inférieures de 100°C à 200°C à celles du vaporéformage principal dans le réacteur-échangeur R.
En sortie du réacteur-échangeur de chaleur (2b), le fluide de chauffage HF transfère typiquement sa chaleur résiduelle au courant comprenant la première charge F1 additionnée de vapeur d'eau, dans un échangeur de chaleur (2a) disposé juste en amont de (2b) vis-à-vis de F1. On utilise ainsi de façon efficace le potentiel thermique de HF qui en sortant de R fournit les calories à relativement haute température nécessaires au vaporéformage partiel préliminaire dans (2b), puis les calories à relativement plus basse température nécessaires au préchauffage du courant comprenant la première charge F1 additionnée de vapeur d'eau.

Le courant comprenant la première charge F1 additionnée de vapeur d'eau est typiquement préchauffé entre 500°C et 740°C (et de préférence entre 580 et 700°C) avant son entrée dans le réacteur-échangeur R. La température de l'effluent de vaporéformage SG1 en sortie du réacteur-échangeur R est typiquement comprise entre 800°C et 950°C (et de préférence entre 820 et 900°C), et la température de HF en sortie du réacteur-échangeur R est typiquement comprise entre 850°C et 1150°C et de préférence entre 900°C et 1050°C.

L'invention concerne également un procédé de production d'hydrogène à partir d'un gaz de synthèse comprenant le gaz de synthèse SG issu du procédé précédemment décrit, selon l'une quelconque de ses variantes.

La partie combustible du fluide de chauffage HF (ou F2 et/ou F3) peut être constituée essentiellement par une fraction de l'hydrogène sensiblement pur produit à partir de SG. F2 et /ou F3 peuvent aussi comprendre un gaz de purge issu d'une étape de purification par adsorption PSA (à balancement de pression) réalisé sur un courant issu de SG. Ceci permet d'utiliser avantageusement ce gaz de purge.

L'invention sera mieux comprise à la lecture de la description des figures annexées dans laquelle l'invention a été décrite dans le cas ou le fluide de chauffage HF est un courant d'oxydation partielle d'hydrocarbures gazeux à l'oxygène.
La figure 1 représente un schéma simplifié de réalisation du procédé selon l'invention.
La figure 2 représente un autre schéma simplifié de réalisation du procédé selon l'invention, représentant de façon plus détaillée un réacteur-échangeur comportant des zones d'oxydation partielle internes.
La figure 3 représente une coupe du réacteur-échangeur de la figure 2.
La figure 4, qui n'est pas selon l'invention, représente un autre schéma simplifié de réalisation du procédé représentant de façon plus détaillée un réacteur-échangeur comportant des zones d'oxydation partielle externes.
Les figures 5a et 5b représentent des schémas simplifiés de réalisation du procédé selon l'invention, dans des installations comportant plusieurs réacteur-échangeurs.

### Description des figures:

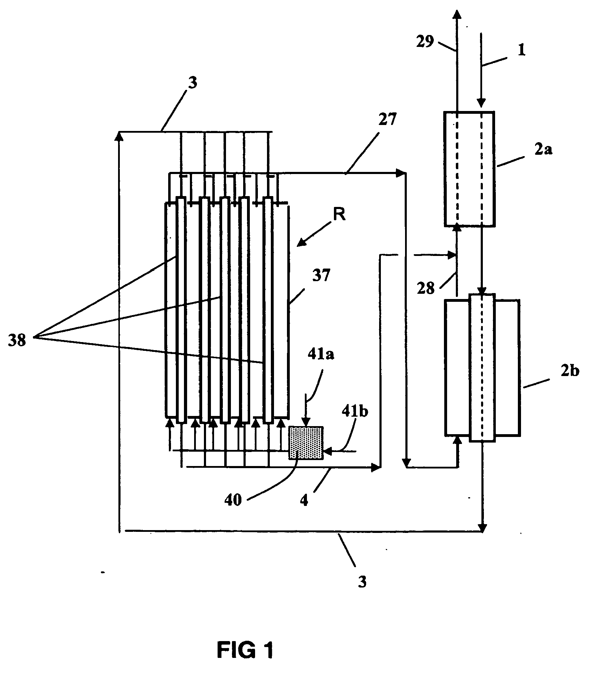

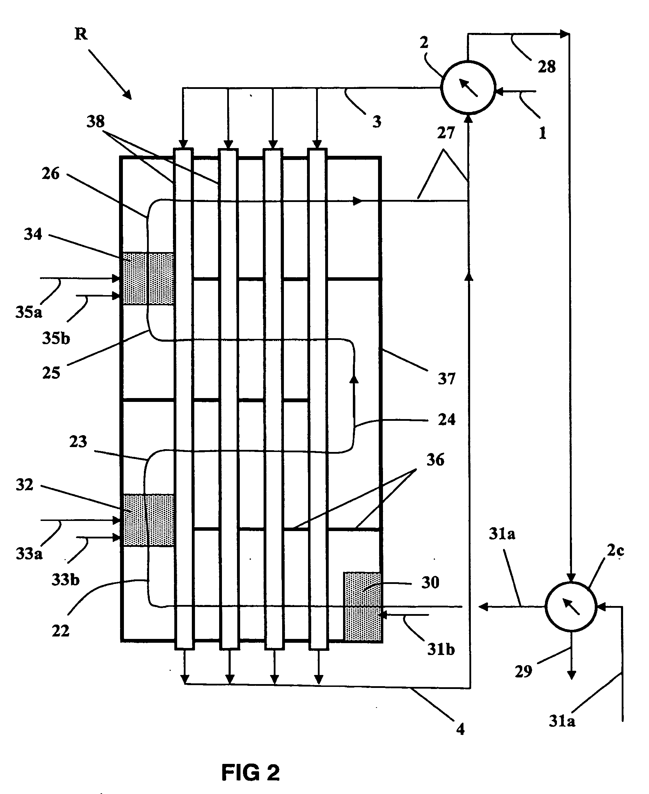

On se réfère maintenant à la figure 1.
Les charges F1, F2, et F3 sont de composition identique, et constituées par un mélange d'un gaz généralement épuré, comprenant typiquement plus de 80% molaire de méthane et de 2 à 15% d'éthane. Le courant comprenant la première charge F1 additionnée de vapeur d'eau a un rapport molaire H2O/F1 typiquement compris entre 1,8 et 3,5. Ce courant entre par la ligne 1 dans l'échangeur de préchauffe 2a, puis traverse le réacteur-échangeur 2b dans lequel est réalisé un prévaporéformage à température de sortie relativement modérée, typiquement comprise entre 650°C et 770°C, de préférence entre 670°C et 740°C. Le réacteur-échangeur 2b est un échangeur multi-tubulaire à tubes contenant un catalyseur de vaporéformage, par exemple l'un des catalyseurs décrits dans les exemples du brevet US 4,906,603. En sortie du réacteur-échangeur 2b, le courant comprenant la première charge F1 additionnée de vapeur d'eau, partiellement converti en gaz de synthèse, alimente par la ligne 3 le réacteur-échangeur principal R, lui aussi multi-tubulaire à tubes contenant un catalyseur de vaporéformage, typiquement de même type que celui du réacteur-échangeur 2b. Ce courant est alors réparti dans une pluralité de tubes réactionnels 38 disposés à l'intérieur de la calandre 37 du réacteur-échangeur R, puis, après vaporéformage, sort du réacteur-échangeur R par la ligne 4, formant un premier gaz de synthèse SG1 et est refroidi dans l'échangeur 2a en mélange avec le deuxième gaz de synthèse SG2.
La charge F2 alimente via une entrée d'hydrocarbures 41a une chambre d'oxydation partielle 40, alimentée par ailleurs en oxygène par la ligne 41b. La charge F2 et/ou l'alimentation en oxygène peuvent typiquement être additionnés de vapeur d'eau (par exemple 20% à 50% molaire de vapeur d'eau) pour limiter les risques de formation de carbone (suies). Les températures de sortie de la chambre d'oxydation partielle 40 sont typiquement comprises entre 1100°C et 1250°C, de préférence entre 1140°C et 1200°C. Le contrôle de cette température peut être réalisé par modulation du rapport molaire O2/(hydrocarbures de F2), souvent compris entre 0,48 et 0,85.
Le fluide HF de chauffage ainsi formé entre dans le réacteur-échangeur R, où une combustion sans flamme peut éventuellement se poursuivre, et transfert une partie notable de la chaleur d'oxydation partielle aux tubes réactionnels 38, permettant ainsi le vaporéformage de F1. A l'intérieur du réacteur-échangeur R, on ajoute une fraction F3 de la charge, et de l'oxygène (par des moyens qui sont représentés à la figure 2), pour réaliser une combustion étagée dans le réacteur-échangeur R et transférer plus de chaleur aux tubes de vaporéformage. Le courant HF sort du réacteur-échangeur R via la ligne 27 pour former un second gaz de synthèse SG2. Ce gaz de synthèse SG2, dont la température en sortie du réacteur-échangeur R est encore élevée, par exemple de l'ordre de 1000°C, alimente le réacteur-échangeur 2b de pré-vaporéformage de la charge F1, ou il est utilisé comme fluide de chauffage, puis sort de 2b via la ligne 28, est mélangé avec le gaz de synthèse SG1 circulant dans la ligne 4, puis le mélange SG ainsi formé est refroidi dans l'échangeur 2a dont il sort par la ligne 29. Le gaz de synthèse SG peut alors subir des traitements complémentaires tels qu'un refroidissement plus poussé, une conversion du CO à la vapeur, une conversion chimique etc... Grâce à 2a et 2b, l'installation de la figure 1 réalise une bonne récupération thermique, en particulier sur l'effluent le plus chaud du réacteur-échangeur R, c'est-à-dire SG2.

On se réfère maintenant à la figure 2: Le réacteur-échangeur R de la figure 2 comprend 3 chambres, ou zones d'oxydation partielle en série, de telle sorte que cette oxydation partielle étagée permette une transmission de chaleur plus importante aux tubes 38 de vaporéformage et/ou l'utilisation de températures maximales plus basses pour HF. Ces 3 zones: 30 (zone initiale), 32 et 34 (zones complémentaires) sont internes à la calandre 37 de R. Ces zones 30, 32, et 34 sont alimentées en hydrocarbures de la charge F2 pour la zone initiale et de la charge F3 pour les zones complémentaires (typiquement additionnés de vapeur d'eau) via respectivement les lignes 31a, 33a, et 35a. Elles sont également alimentées en oxygène via respectivement les lignes 31b, 33b, et 35b. Il peut également y avoir présence de vapeur d'eau dans les mêmes conditions que pour l'installation de la figure 1.
Le fluide de chauffage circule à l'intérieur de R à courant croisé et contre-courant global en suivant la ligne de circulation figurant sur la figure 2 et indiquée par les références 22, 23, 24, 25, et 26. Cette circulation est imposée par la présence d'entretoises ou chicanes 36 dans le réacteur-échangeur R, de façon analogue aux entretoises ou chicanes de la calandre d'un échangeur de chaleur à tubes et calandre conventionnel.
La récupération de chaleur sur les effluents du réacteur-échangeur R du dispositif de la figure 2 est également performante, mais diffère de celle de la figure 1: On utilise également deux échangeurs, qui sont référencés 2 et 2c mais seul l'échangeur 2 transmet de la chaleur à la charge F1 de vaporéformage alors que l'échangeur 2c transmet de la chaleur à la charge F2 d'oxydation partielle, additionnée de vapeur d'eau. On obtient donc un préchauffage de plusieurs courants alimentant R, et en particulier de la charge de vaporéformage et de la charge F2 d'oxydation partielle. On pourrait également préchauffer les fluides ajoutés à HF au cours de l'oxydation partielle étagée, en particulier les hydrocarbures et/ou la vapeur d'eau, et/ou préchauffer l'oxygène.

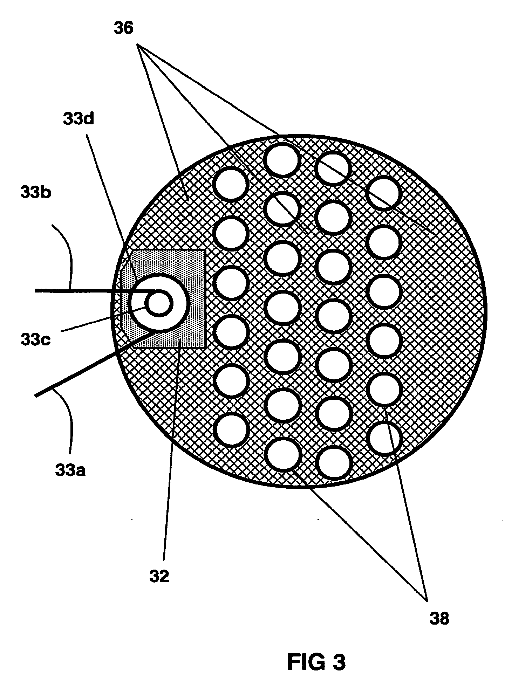

La figure 3, qui représente une vue de dessus d'une coupe du réacteur-échangeur R de la figure 2 au dessus de la zone 32 montre en vue de dessus ces entretoises 36. La zone d'oxydation partielle 32 comprend un brûleur avec introduction d'hydrocarbures et d'oxygène via les lignes 33a et 33b qui alimentent tangentiellement deux tubes concentriques 33d et 33c pour créer un mélange rapide par vortex contrarotatifs.
Les extrémités du réacteur-échangeur R de la figure 2 comprennent typiquement des fonds bombés conventionnels, non représentés pour des raisons de clarté de la figure, et R englobe la totalité des tubes réactionnels 38.
L'installation de la figure 2 ne représente qu'un échangeur de chaleur 2, mais pourrait également comprendre des réacteurs-échangeurs et/ou échangeurs de chaleur tels que 2a et 2b de l'installation de la figure 1.
Le réacteur-échangeur R des figures 2 et 3 ne représente qu'un type de réacteur-échangeur utilisable pour la mise en oeuvre du procédé selon l'invention et d'autres types de réacteur-échangeur R peuvent être utilisés sans sortir du cadre de l'invention.

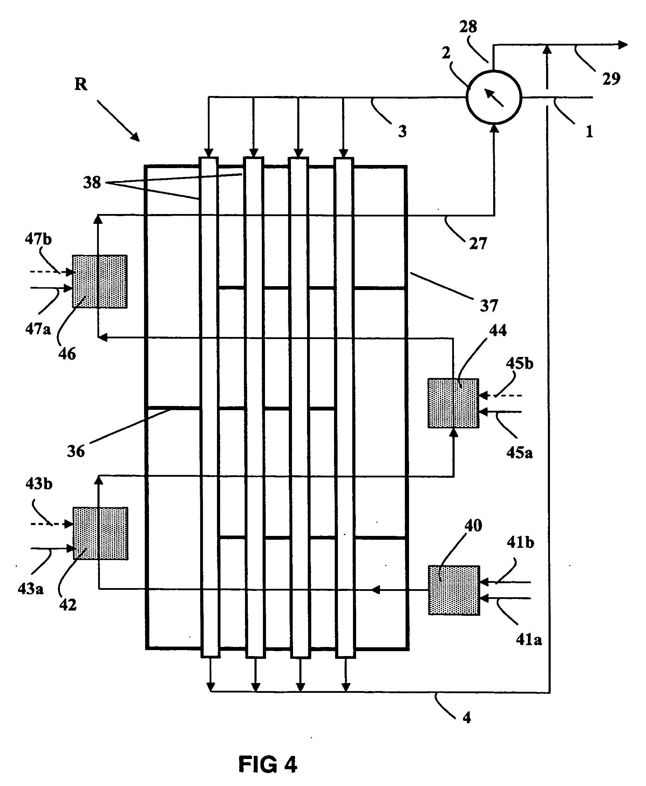

L'installation de la figure 4, qui n'est pas selon l'invention, est assez proche de celle de la figure 2, mais utilise des zones d'oxydation partielle externes et non internes à R, permettant, au prix d'une réalisation moins compacte, d'utiliser des brûleurs et/ou des zones d'oxydation standards sans problèmes d'encombrement. Ces zones 40, 42, et 44 sont alimentées en hydrocarbures de F2 et F3 via respectivement les lignes 41a, 43a, et 45a. Elles sont également alimentées en oxygène via respectivement les lignes 41b, 43b, et 45b. Il peut également y avoir présence de vapeur d'eau dans les mêmes conditions que pour l'installation de la figure 1.

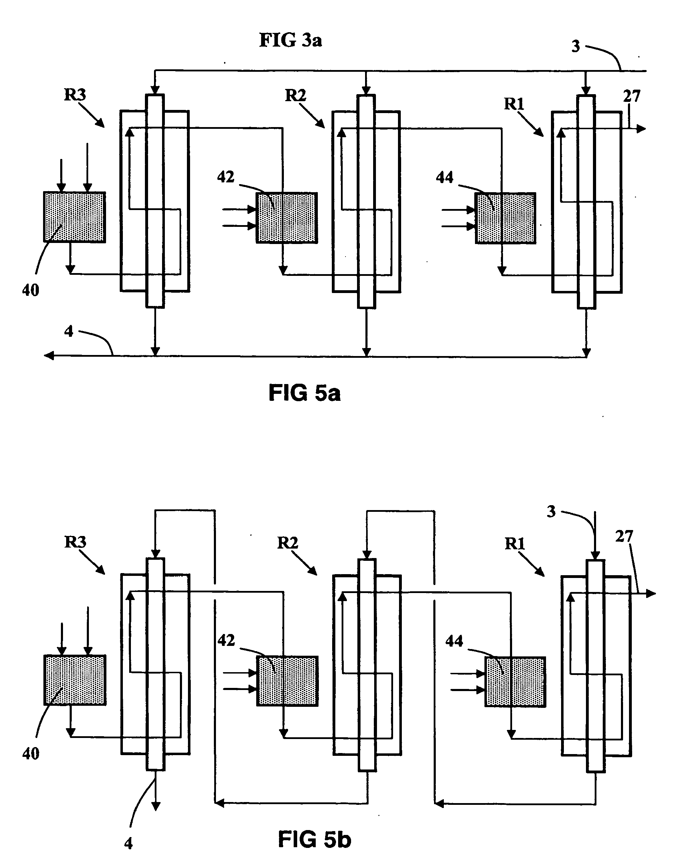

La figure 5a représente une installation comprenant trois réacteurs-échangeurs R1, R2 et R3, traversés en parallèle par des parties du courant comprenant la première charge F1 additionnée de vapeur d'eau, et traversés en série par un courant HF d'oxydation partielle étagée, avec réchauffage intermédiaire de HF entre deux réacteurs-échangeurs successifs. Une telle installation pourrait comprendre non pas trois, mais deux, quatre, ou de façon générale plusieurs réacteurs-échangeurs Ri.
L'installation de la figure 5b est assez proche de celle de la figure 5a, mais utilise pour le courant comprenant la première charge F1 additionnée de vapeur d'eau une circulation en série (vaporéformage étagé) dans les échangeurs R1, R2, R3, à contre-courant d'ensemble avec le courant d'oxydation partielle HF, également étagé. Cette configuration permet d'obtenir une récupération thermique et une efficacité énergétique très élevée, le réacteur-échangeur R1, qui réalise un prévaporéformage pouvant être opéré à relativement basse température. De même, l'installation de la figure 5b pourrait comprendre non pas trois, mais deux, quatre, ou de façon générale plusieurs réacteurs-échangeurs Ri.

### Exemple:

On simule la production d'un gaz de synthèse SG sous pression de 2,5 MPa à partir d'un gaz naturel dans une installation du type de celle de la figure 2. Les charges F1 et F2 sont de composition identique (gaz naturel assimilé à du méthane).
Les conditions d'entrée (ligne 1) sont les suivantes: F1 = gaz naturel, avec un débit (de méthane) de 50 000 NM³/h; F1 est additionné par H2O (vapeur d'eau) avec un rapport molaire H2O/F1 = 3 (H2O et F1 en % molaire). Le courant F1 + H2O est préchauffé à 600°C dans l'échangeur 2, puis alimente le réacteur-échangeur R sous une pression de 2,5 MPa qui est la pression de l'installation (pour la simulation, on n'a pas pris en compte les pertes de charges). Après vaporéformage catalytique, avec une température de sortie de 850°C (dans la ligne 4), le premier gaz de synthèse SG1 obtenu est mélangé avec le second gaz de synthèse SG2 circulant dans la ligne 27, le mélange SG1 + SG2 alimentant l'échangeur de chaleur 2.
Dans la première zone d'oxydation partielle 30, on alimente via la ligne 31a 100 433 NM³/h de méthane additionné avec de la vapeur d'eau saturante (rapport H2O/Méthane = 1 en % molaire), et via la ligne 31b, 64 650 NM³/h d'oxygène, pour former, par oxydation partielle, un premier fluide de chauffage HF à 1150°C, qui est refroidi à 1000°C dans le réacteur-échangeur R avant d'être réchauffé dans la seconde zone complémentaire d'oxydation partielle 32. Dans cette zone 32, on alimente 20 883 NM³/h de méthane et 19 776 NM³/h d'oxygène, avec de la vapeur d'eau (H2O/Méthane = 1 en % molaire). Le méthane est alimenté à 20°C, et la vapeur d'eau aux conditions de vapeur saturante. Cette oxydation partielle complémentaire remonte la température de HF à 1150°C. HF transmet à nouveau de la chaleur aux tubes 38, et sa température retombe à 845°C.
On alimente alors dans la seconde zone complémentaire d'oxydation partielle 34 un débit de 28 285 NM³/h de méthane et 12 993 NM³/h d'oxygène, avec de la vapeur d'eau (H2O/Méthane = 1 en % molaire), dans les mêmes conditions que pour la zone 32. Cette zone 34 est une zone d'oxydation catalytique, et utilise un catalyseur comprenant 5% poids de rhodium tel que celui décrit dans l'exemple 1 de la demande de brevet US 2002/0004450 A1, ou celui de l'exemple 1 du brevet US 5,510,056. Le mélange global avec HF de cette oxydation partielle complémentaire catalytique (ce mélange étant également un fluide HF) remonte la température initiale de HF à 900 °C. HF transmet à nouveau de la chaleur aux tubes 38, et sa température retombe à 750°C à sa sortie de R, formant un second gaz de synthèse SG2 qui circule dans la ligne 27.
Ce second gaz de synthèse SG2 est mélangé avec SG1 pour former le gaz de synthèse SG global, qui est refroidi à 662°C dans l'échangeur de chaleur 2 puis rejoint via la ligne 28 l'échangeur de chaleur 2c dans lequel il est refroidi à 546°C. Cet échangeur 2c permet de préchauffer la charge F2 additionnée de vapeur d'eau à 500°C.
Les gaz de synthèse SG1, SG2, et le gaz de synthèse final SG obtenu (qui comprend 469 182 NM³ de H2+CO) ont les compositions suivantes, en % molaire, et en tenant compte de H2O :

| % molaire | SG1 : effluent de vaporéformage (ligne 4) | SG2 : effluent de POX (lignes 27, 28) | SG : gaz de synthèse final (ligne 29) |
|---|---|---|---|
| H2 | 47,9 | 45 | 46 |
| CO | 8,9 | 16,3 | 13,8 |
| CO2 | 5,3 | 7,5 | 6,8 |
| CH4 | 3,7 | 2,3 | 2,8 |
| H2O | 34,2 | 28,9 | 30,6 |

L'homme du métier pourra déduire aisément de la description qui précède la conception d'une installation pour la mise en oeuvre du procédé selon l'invention, ainsi que son fonctionnement, dans le cas ou le fluide de chauffage HF résulte d'une combustion typiquement totale d'hydrocarbures en général gazeux à l'air, et non plus d'une oxydation partielle à l'oxygène en présence de vapeur d'eau: Dans ce cas, le courant HF circulant dans la ligne 28 consiste en des fumées sous pression, et n'est pas mélangé avec le gaz de synthèse SG1 issu du vaporéformage, circulant dans la ligne 4. Les températures utilisables pour HF, notamment en sortie de la ou des zone(s) complémentaire(s) de combustion sont identiques. Ce mode de réalisation de l'invention permet d'éviter la nécessité de production d'oxygène. L'air utilisé peut être comprimé dans la partie compresseur d'une turbine à gaz, et le fluide de chauffage HF résultant de la combustion étagée, conformément au procédé selon l'invention, peut être détendu dans la partie turbine de la turbine à gaz, ou d'une autre turbine, après utilisation comme fluide de chauffage pour le vaporéformage et de préférence le prévaporéformage. Il peut se révéler utile de réaliser une combustion complémentaire avant détente dans la turbine, pour maximiser l'énergie mécanique récupérée.

Le gaz de synthèse SG peut être soumis en aval à une conversion du CO à la vapeur, pour produire de l'hydrogène. Dans ce cas, une partie de l'hydrogène produit, après élimination du CO2 (par exemple par lavage aux amines) peut optionnellement être utilisé comme combustible pour chauffer le réacteur-échangeur R, en tant que charge F2 et/ou charge F3 ajoutée à HF au cours d'une oxydation étagée. On peut aussi utiliser pour F2 et/ou F3 (la partie combustible de HF) un gaz de purge (comprenant typiquement du CO et du méthane résiduel, et souvent du CO2), issu de la purification d'un courant issu de SG par adsorption à balancement de pression (adsorption connue également sous le nom de PSA). Cette adsorption est typiquement une purification finale, après shift conversion (conversion à la vapeur d'eau) du CO contenu dans SG.
Le gaz de synthèse peut également être utilisé, souvent après ajustement du rapport H2/CO (par exemple par séparation de l'hydrogène en excès) pour une conversion chimique, par exemple en alcools ou autres oxygénés, ou en oléfines et/ou en paraffines.

## Revendications

1. Procédé de production d'un gaz de synthèse SG à partir d'une charge globale F constituée d'hydrocarbures et optionnellement de composés recyclés, F comprenant une première charge F1 (22,23,24,25,26), une seconde charge F2 (31a) et une troisième charge F3 (33a,35a), dans lequel:
on soumet un courant comprenant la première charge F1 additionnée de vapeur d'eau à un vaporéformage pour la production d'une fraction au moins du gaz de synthèse SG dans au moins un réacteur-échangeur multitubulaire (R) comprenant une pluralité de tubes réactionnels (38) contenant un catalyseur de vaporéformage et une calandre (37) contenant ces tubes, la première charge F1 additionnée de vapeur d'eau circulant a l'intérieur d'une pluralité de tubes selon une direction ;
• on chauffe principalement par convection lesdits tubes réactionnels (38) par circulation dans ladite calandre d'un fluide HF (22,23,24,25,26) de chauffage externe à ces tubes, localement en courant croisé, mais globalement à contre-courant d'ensemble de F1, dans lequel HF comprend au moins un premier courant de gaz de combustion partielle ou totale de la deuxième charge F2, que l'on fait circuler dans le réacteur-échangeur (R) pour le chauffage des tubes réactionnels, puis que l'on mélange dans au moins une zone de combustion complémentaire (32, 34) interne à la calandre avec au moins une partie de la troisième charge F3 et un gaz comprenant de l'oxygène (33b,35b), afin d'augmenter la température dudit premier courant, puis le courant du mélange ainsi obtenu circule dans le réacteur-échangeur (R) pour un chauffage complémentaire des tubes réactionnels (38) avant de sortir de ce réacteur-échangeur.
• on produit le gaz de synthèse SG (28) à partir de l'effluent de vaporéformage (4) de F1, et optionnellement d'une partie ou de la totalité de HF.

2. Procédé selon la revendication 1 dans lequel on injecte en un point à l'intérieur de la calandre du réacteur-échangeur (R) une partie au moins de F3 et un gaz contenant de l'oxygène, dans des conditions de turbulence et/ou de recirculation suffisantes pour obtenir une combustion en régime homogène dans au moins une zone de la calandre du réacteur-échangeur (R).

3. Procédé selon l'une des revendications 1 et 2 dans lequel on injecte en un point à l'intérieur de la calandre du réacteur-échangeur une partie au moins de F3 et un gaz contenant de l'oxygène en amont d'une zone de combustion catalytique, dans des conditions ou la température du mélange obtenu est inférieure à la température ou la combustion se produit avec une flamme.

4. Procédé selon la revendication 3 dans lequel ledit courant comprenant la première charge F1 additionnée de vapeur d'eau rentre dans le réacteur-échangeur (R) à une extrémité dudit réacteur-échangeur (R), et ladite zone de combustion catalytique est située dans la première moitié du réacteur-échangeur relativement à cette extrémité.

5. Procédé selon l'une des revendications précédentes dans lequel la zone complémentaire de combustion est une zone exempte de tubes réactionnels et sensiblement contigue à la paroi interne de la calandre du réacteur-échangeur.

6. Procédé selon l'une des revendications précédentes dans lequel ledit fluide de chauffage HF, en sortie du réacteur-échangeur (R) échange de la chaleur avec ledit courant comprenant la première charge F1 additionnée de vapeur d'eau, pour un pré-vaporéformage de F1 dans un autre réacteur-échangeur (2b), avant son entrée dans le réacteur-échangeur (R).

7. Procédé selon l'une des revendications précédentes dans lequel ledit courant comprenant la première charge F1 additionnée de vapeur d'eau est préchauffé entre 500°C et 740°C avant son entrée dans le réacteur-échangeur (R) la température de l'effluent de vaporéformage en sortie du réacteur-échangeu (R) est comprise entre 800°C et 950°C, et la température de HF en sortie du réacteur-échangeur (R) est comprise entre 850°C et 1150°C.

8. Procédé selon l'une des revendications précédentes dans lequel ledit fluide de chauffage HF est un courant d'oxydation partielle d'hydrocarbures à l'oxygène sous une pression comprise entre 0,5 et 12 MPa, sensiblement exempt d'azote et comprenant de préférence de la vapeur d'eau.

9. Procédé selon l'une des revendications 1 à 7 dans lequel ledit fluide de chauffage HF est un gaz de combustion totale d'hydrocarbures à l'air sous une pression comprise entre 0,4 et 4 MPa.

10. Procédé de production d'hydrogène à partir d'un gaz de synthèse comprenant le gaz de synthèse SG issu du procédé selon l'une des revendications précédentes.

11. Procédé selon la revendication 10 dans lequel la partie combustible dudit fluide de chauffage HF est constituée essentiellement par une fraction de l'hydrogène sensiblement pur produit à partir de SG.

12. Procédé selon la revendication 10 dans lequel F2 et/ou F3 comprend un gaz de purge issu d'une étape de purification par adsorption PSA réalisé sur un courant issu de SG.

## Claims

1. A process for producing a synthesis gas SG from a general feed F constituted by hydrocarbons and optionally recycled compounds, F comprising a first feed F1 (1), a second feed F2 (31a) and a third feed F3 (33a, 35a), in which:
• a stream comprising the first feed F1 supplemented with steam undergoes steam reforming to produce at least one fraction of synthesis gas SG in a multi-tube reactor-exchanger (R) comprising a plurality of reaction tubes (38) containing a steam reforming catalyst, and a shell (37) containing said tubes, the first feed P1 supplemented with steam circulating inside a plurality of tubes in one direction;
• said reaction tubes (38) are heated principally by convection by circulating a heating fluid HF (22, 23, 24, 25, 26) external to said tubes in said shell, locally as a cross-current but generally as a counter-current to F1, in which HF comprises at least a first stream of gas from partial or total combustion of the second feed F2, which is caused to circulate in the reactor-exchanger (R) to heat the reaction tubes, then said fluid HF is mixed in a complementary combustion zone (32, 34) inside the shell with at least a portion of the third feed F3 and a gas comprising oxygen (33b, 35b) to increase the temperature of said first stream, then the stream of the mixture obtained moves in the reactor-exchanger (R) to provide complementary heat to the reaction tubes (38) before leaving the reactor-exchanger;
• synthesis gas SG (28) is produced from the steam reforming effluent F1 (4) and optionally from part or all of the HF.

2. A process according to claim 1, in which at least a portion of F3 and a gas containing oxygen are injected at a point inside the shell of the reactor-exchanger R under turbulent conditions and/or recirculation conditions sufficient to obtain homogeneous combustion in at least one zone of the shell of the reactor-exchanger R,

3. A process according to one of claims 1 to 2, in which at least a portion of F3 and a gas containing oxygen are injected at a point inside the shell of the reactor-exchanger (R) upstream of a catalytic combustion zone, under conditions in which the temperature of the mixture obtained is lower than the temperature in which combustion occurs with a flame.

4. A process according to claim 3, in which said stream comprising the first feed F1 supplemented with steam returns to the reactor-exchanger (R) at one end of (R), and said catalytic combustion zone is located in the first half of the reactor-exchanger relative to said end.

5. A process according to one of the preceding claims, in which the complementary combustion zone is a zone which is free of reaction tubes and substantially contiguous with the inner wall of the shell of the reactor-exchanger.

6. A process according to one of the preceding claims, in which said heating fluid HF, at the outlet from the reactor-exchanger (R) exchanges heat with said stream comprising the first feed F1 supplemented with steam to pre-steam-reform F1 in a other reactor-exchanger (2b) before it enters the reactor-exchanger (R).

7. A process according to one of the preceding claims, in which said stream comprising the first feed F1 supplemented with steam is pre-heated to between 500°C and 740°C before it enters the reactor-exchanger (R), the temperature of the steam reforming effluent at the outlet from the reactor-exchanger (R) is in the range 800°C to 950°C, and the temperature of HF at the outlet from the reactor-exchanger (R) is in the range 850°C to 1150°C.

8. A process according to one of the preceding claims, in which said heating fluid HF is a stream from the partial oxidation of hydrocarbons with oxygen at a pressure in the range 0.5 to 12 MPa, substantially free of nitrogen and preferably comprising steam,

9. A process according to one of claims 1 to 7, in which said heating fluid HF is a gas from the total combustion of hydrocarbons in air using a pressure in the range 0.4 to 4 MPa.

10. A process for producing hydrogen from a synthesis gas comprising synthesis gas SG derived from a process according to one of the preceding claims.

11. A process according to claim 10, in which the combustible portion of said heating fluid HF is essentially constituted by a fraction of substantially pure hydrogen produced from SG.

12. A process according to claim 10, in which F2 and/or F3 comprise(s) a purge gas derived from a pressure swing adsorption step PSA carried out on a stream derived from SG.

## Patentansprüche

1. Verfahren zur Herstellung eines Synthesegases SG aus einer Gesamtcharge F, die aus Kohlenwasserstoffen und möglicherweise aus zurückgeführten Verbindungen besteht, wobei F eine erste Charge F1 (1), eine zweite Charge F2 (31a) und eine dritte Charge F3 (33a, 35a) umfasst, wobei:
• ein Strom, der die erste Charge F1 mit einem Zusatz von Wasserdampf umfasst, einer Dampfreformierung unterzogen wird, um in mindestens einem Rohrbündel-Austauschreaktor (R), der mehrere Reaktionsröhren (38), welche einen Dampfreformierungskatalysator enthalten und ein Gehäuse (37), welches diese Röhren enthält, umfasst, zumindest eine Fraktion des Synthesegases SG herzustellen, wobei die erste Charge F1 mit Wasserdampfzusatz das Innere mehrerer Röhren in einer Richtung durchströmt;
• die Reaktionsröhren (38) hauptsächlich **dadurch** erhitzt werden, dass das Gehäuse von einem Heizfluid HF (22, 23, 24, 25, 26) durchströmt wird, das nicht in diese Röhren gelangt, wobei seine Flussrichtung gegenüber der Gesamtheit von F1 örtlich kreuzend, insgesamt jedoch entgegengerichtet ist, wobei HF mindestens einen ersten Gasstrom aus der teilweisen oder vollständigen Verbrennung der zweiten Charge F2 umfasst, welcher zum Zwecke der Erhitzung der Reaktionsröhren in den Austauschreaktor (R) einströmen gelassen wird, woraufhin er in mindestens einem zusätzlichen Verbrennungsbereich (32, 34), der sich im Inneren des Gehäuses befindet, mit mindestens einem Teil der dritten Charge F3 und einem sauerstoffhaltigen Gas (33b, 35b) vermischt wird, um die Temperatur des ersten Stroms zu erhöhen, woraufhin der Strom der Mischung, die auf diese Weise erhalten wurde, den Austauschreaktor (R) durchströmt, um die Reaktionsröhren (38) zusätzlich zu erhitzen, bevor er diesen Austauschreaktor verlässt.
• das Synthesegas SG (28) aus dem Stoffstrom (4), der aus der Dampfreformierung von F1 hervorgeht, und möglicherweise aus einem Teil oder der Gesamtheit von HF hergestellt wird.

2. Verfahren nach Anspruch 1, wobei an einer Stelle, die sich im Inneren des Gehäuses des Austauschreaktors (R) befindet, zumindest ein Teil von F3 und ein sauerstoffhaltiges Gas eingeleitet werden, und zwar unter Bedingungen der Turbulenz und/oder der Rückführung, die ausreichend sind, um eine homogene Verbrennung in mindestens einem Bereich des Gehäuses des Austauschreaktors (R) zu erzielen.

3. Verfahren nach einem der Ansprüche 1 und 2, wobei an einer Stelle, die sich im Inneren des Gehäuses des Austauschreaktors (R) befindet, zumindest ein Teil von F3 und ein sauerstoffhaltiges Gas stromaufwärts eines katalytischen Verbrennungsbereichs eingeleitet werden, und zwar Bedingungen, bei denen die Temperatur der erhaltenen Mischung niedriger als die Temperatur ist, bei welcher die Verbrennung mit einer Flamme abläuft.

4. Verfahren nach Anspruch 3, wobei der Strom, der die erste Charge F1 mit Wasserdampfzusatz umfasst, an einem Ende des Austauschreaktors (R) in den Austauschreaktor (R) eintritt und sich der katalytische Verbrennungsbereich unter Bezugnahme auf dieses Ende in der ersten Hälfte des Austauschreaktors befindet.

5. Verfahren nach einem der vorhergehenden Ansprüche, wobei es sich bei dem zusätzlichen Verbrennungsbereich um einen Bereich handelt, der frei von Reaktionsröhren ist und im Wesentlichen an die Innenwand des Gehäuses des Austauschreaktors angrenzt.

6. Verfahren nach einem der vorhergehenden Ansprüche, wobei das Heizfluid HF an der Austrittsöffnung des Austauschreaktors (R) mit dem Strom, der die erste Charge F1 mit Wasserdampfzusatz umfasst, einen Wärmeaustausch erfährt, damit F1 vor seinem Eintritt in den Austauschreaktor (R) in einem anderen Austauschreaktor (2b) eine Vor-Dampfreformierung erfährt.

7. Verfahren nach einem der vorhergehenden Ansprüche, wobei der Strom, der die erste Charge F1 mit Wasserdampfzusatz umfasst, vor seinem Eintritt in den Austauschreaktor (R) auf 500 °C bis 740 °C vorgeheizt wird, wobei die Temperatur des Stroms, der nach der Dampfreformierung aus der Austrittsöffnung des Austauschreaktors (R) austritt, im Bereich von 800 °C bis 950 °C liegt und die Temperatur von HF an der Austrittsöffnung des Austauschreaktors (R) im Bereich von 850 °C bis 1150 °C liegt.

8. Verfahren nach einem der vorhergehenden Ansprüche, wobei das Heizfluid HF ein Strom ist, der sich aus der teilweisen Oxidation von Kohlenwasserstoffen mit Sauerstoff unter einem Druck im Bereich von 0,5 bis 12 MPa ergibt, wobei er im Wesentlichen frei von Stickstoff ist und vorzugsweise Wasserdampf umfasst.

9. Verfahren nach einem der Ansprüche 1 bis 7, wobei das Heizfluid HF ein Gas ist, das sich aus der vollständigen Verbrennung von Kohlenwasserstoffen mit Luft unter einem Druck im Bereich von 0,4 bis 4 MPa ergibt.

10. Verfahren zur Herstellung von Wasserstoff aus einem Synthesegas, welches das Synthesegas SG aus dem Verfahren nach einem der vorhergehenden Ansprüche umfasst.

11. Verfahren nach Anspruch 10, wobei der brennbare Teil des Heizfluids HF im Wesentlichen aus einer Fraktion nahezu reinen Wasserstoffs besteht, der ausgehend von SG hergestellt wurde.

12. Verfahren nach Anspruch 10, wobei F2 und/oder F3 ein Spülgas umfassen, das aus einem Schritt der Aufreinigung mittels Adsorption PSA stammt, den ein Strom erfahren hat, der aus SG stammt.
